## Europäisches Patentamt

## European Patent Office

## Office européen des brevets

(19)

(11) Publication number: **0 218 343 B1**

# EUROPEAN PATENT SPECIFICATION

(12)

(45) Date of publication of the patent specification: **19.07.89**

(51) Int. Cl.⁴: **C04B 35/58**

(21) Application number: **86306419.2**

(22) Date of filing: **19.08.86**

(54) Silicon nitride sintered body and manufacturing method thereof.

(30) Priority: **17.09.85  JP 204985/85**

(43) Date of publication of application:
**15.04.87 Bulletin 87/16**

(45) Publication of the grant of the patent:
**19.07.89 Bulletin 89/29**

(84) Designated Contracting States:
**DE GB SE**

(56) References cited:
**JP-A-52 122 299**
**JP-A-56 022 678**

(73) Proprietor: **NGK INSULATORS, LTD., 2-56, Suda-cho, Mizuho-ku, Nagoya-shi, Aichi 467(JP)**

(72) Inventor: **Oda, Isao, 19 Gokuraku 3-chome Meito-ku, Nagoya City Aichi Pref.(JP)**
Inventor: **Soma, Takao, 55-1 Aza-Ozakiyama Narumi-Cho Midori-ku, Nagoya City Aichi Pref.(JP)**

(74) Representative: **Paget, Hugh Charles Edward et al, MEWBURN ELLIS & CO. 2/3 Cursitor Street, London EC4A 1BQ(GB)**

## Description

The present invention relates to a silicon nitride sintered body and a method of manufacturing the same.

Since a silicon nitride sintered body has excellent mechanical strength, fracture toughness, thermal resistance, thermal shock resistance, etc., its use as a heat-resistant high strength material has been actively developed.

Since silicon nitride is a substance having strong covalent bonding and in itself extremely poor sinterability, a sintering aid such as MgO, Al₂O₃, Y₂O₃, ZrO₂ or the like is generally added to obtain high density sintered bodies. Among such sintered bodies of high mechanical strength and thermal shock resistance, there are known from Japanese patent publication No. sho 55-46,997 silicon nitride sintered bodies containing BeO, MgO, SrO and oxides of rare earth elements.

However, although the above-mentioned silicon nitride sintered bodies possess high mechanical strength and large thermal shock resistance, they have the drawback that their heat conductivity is too high, for instance, when they are used as engine parts necessitating heat insulation. The thermal conductivity of the above-mentioned silicon nitride sintered bodies is about 29 W/mK ( 0.07 cal/cm.sec. °C), which is too high for the application to parts such as engine parts required to provide heat insulation.

It is an object of the present invention at least partly to overcome the above-mentioned defect, and is to provide a silicon nitride sintered body which maintains high mechanical strength and high thermal shock resistance and is low in thermal conductivity.

Another object of the present invention is to provide a method of manufacturing such a silicon nitride sintered body.

According to the present invention, there is provided a silicon nitride sintered body which essentially consists of compounds of Mg, Sr, Ce and Al in amounts respectively of from 0.5 to 5% by weight calculated as MgO, from 0.5 to 5% by weight calculated as SrO, from 1 to 10% by weight calculated as CeO₂ and from 1 to 20% by weight calculated as Al₂O₃, respectively, the balance being silicon nitride.

According to another aspect of the present invention, there is provided a method of manufacturing a silicon nitride sintered body, which comprises the steps of preparing the molding a formulated raw material essentially consisting of compounds of Mg, Sr, Ce and Al in amounts respectively of from 0.5 to 5% by weight calculated as MgO, from 0.5 to 5% by weight calculated as SrO, from 1 to 10% by weight calculated as CeO₂ and from 1 to 20% by weight calculated as Al₂O₃, respectively, the balance being a silicon nitride raw material powder, and then firing the resulting molding in a nitrogen atmosphere or an inert gas atmosphere.

It is preferred that a silicon nitride powder used as the silicon nitride raw material contains not less than 30% by weight of α-phase, is of such a purity that it contains not more than 1% of metallic impurities and has an average particle size of not more than 10 μm.

It is also preferred that the silicon nitride in the resulting sintered body contains not less than 90% by weight of β-phase.

Moreover, it is preferable that the firing conditions are a temperature of from 1,600°C to 1,900°C and a time of from 0.2 to 5 hours.

The present invention is based on the discovery that when a silicon nitride sintered body having high mechanical strength as well as high thermal shock resistance is constituted as mentioned above with inclusion of a compound of Al in an amount of from 1 to 20% by weight calculated as Al₂O₃, Al dissolves into β-Si₃N₄ particles or the grain boundary phase thereof, whereby the thermal conductivity can be arbitrarily reduced down to about one fifth of that of the known bodies, while mechanical strength and thermal shock resistance are maintained.

The present invention will be explained in more detail below.

It is known that there are two crystalline structures, known as α-phase and β-phase, in silicon nitride When silicon nitride is heated at a temperature of not less than 1,400°C, α-phase begins to transform to β-phase. When the temperature becomes not less than 1,600°C, the transformation rate increases. On the other hand, when SrO and MgO are heated at a temperature of 1,600°C or higher, they form SrO-MgO-SiO₂ base crystals or liquid phase through reaction with SiO₂ present in a very small amount in Si₃N₄. Since these reactions take place simultaneously with the transformation of the α-phase to the β-phase, densification is promoted and at the same time the particles of Si₃N₄ are firmly bonded together.

When CeO₂ is present together with SrO, MgO, etc., CeO₂ is uniformly distributed in interfaces of the Si₃N₄ particles and bonds with SrO, MgO and SiO₂ to form a liquid phase or crystals having high melting point. Thus, CeO₂ has an excellent effect on densification of the silicon nitride. The resulting silicon nitride sintered body is composed of very fine and uniform particles, which are considered largely to contribute to the densification and the strengthening of the silicon nitride sintered body according to the present invention.

It is preferable that the silicon nitride powdery raw material used in the present invention contains not less than 30% by weight of α-phase. The reason therefor is that the transformation from the α-phase to the β-phase of silicon nitride participates in the sintering as mentioned before. In order fully to promote the sintering, it is desirable that α-phase is present in an amount of not less than 30%. As to the impurities in the silicon nitride powder, it is desirable that the silicon nitride powder contains not more than 1% of metallic impurities, because impurity components evaporate during firing at high temperatures to cause pores or react with additives to form a liquid phase of a low melting point and thus greatly reduce the high temperature properties of the sintered body. Further, since silicon nitride has poor sinterability, it is desirable that the particle size of the raw material is fine and the surface tension of the raw material powder is large. It is favorable to use fine particles of not more than 10 microns size.

As the amount of additive components is larger, densification is improved, but excess additive components form a large amount of different phase between the silicon nitride particles which unfavourably affects the properties of the material as high temperature material. Further, if the amounts of the compounds of Mg, Sr and Ce are less than 0.5% by weight calculated as MgO, less than 0.5% by weight calculated as SrO and less than 1% by weight calculated as $CeO_2$, respectively, the densification is insufficient and mechanical strength is low. Therefore, the amounts of Mg, Sr and Ce present are restricted in the present invention to from 0.5 to 5% by weight calculated as MgO, from 0.5 to 5% by weight calculated as SrO, and from 1 to 10% by weight calculated as $CeO_2$, respectively. If the compound of Al is present in an amount of less than 1% by weight calculated as $Al_2O_3$, reduction in the thermal conductivity is not observed, while if it is present in more than 20% by weight, mechanical strength is lowered. Thus, the amount of the compound of Al is restricted in the invention to from 1 to 20% by weight calculated as $Al_2O_3$, preferably 2 to 15%, more preferably 7 to 15%.

The silicon nitride sintered body according to the present invention may be produced by the following method.

A formulated raw material is prepared from a raw material powder comprising compounds of Mg, Sr, Ce and Al as sintering aids in amounts of from 0.5 to 5% by weight calculated as MgO, from 0.5 to 5% by weight calculated as SrO, from 1 to 10% by weight calculated as $CeO_2$, and from 1 to 20% by weight calculated as $Al_2O_3$, respectively, the balance being silicon nitride. For this, use may be made of a rotary mill, a vibration mill, an attrition mill, etc. Either wet type milling or dry type milling may be used, and the formulated powder amount the amount of media, the liquid medium, the viscosity of a slurry, etc. may be appropriately selected depending upon the milling system. As the liquid medium, use may be made of acetone, alcohol, water, etc. Milling time depends upon the milling system and volume, and is chosen preferably so that the milled powder is made fine and the average particle size and the BET specific surface area are saturated up to constant limit values. The average particle size is preferably not more than 10 μm, and the BET specific surface area is preferably from 1 to 50 m²/g.

If necessary, a molding aid such as polyvinyl alcohol is added to the formulated raw material milled up to a desired particle size, and after stirring, the resulting powder or slurry is dried to obtain a powder to be molded. The thus obtained powder is molded into a desired profile by means of an isostatic press, etc., and is then fired at a temperature of 1,600-1,900°C in a nitrogen atmosphere or an inert gas atmosphere for a time of 0.2-5 hours, preferably 0.5-2 hours, thereby obtaining a silicon nitride sintered body.

Any compounds may be used as the starting compounds of Sr, Mg, Ce and Al so long as they give oxides or oxynitrides through firing. For instance, use may be made of SrO, $SrCO_3$, $Sr(NO_3)_2 \cdot 4H_2O$, MgO, $MgCO_3$, $Mg(OH)_2$, $Mg(NO_3)_2 \cdot 6H_2O$, $CeO_2$, $Ce(NO_3)_3 \cdot 6H_2O$, $Al_2O_3$, $Al(NO_3)_3 \cdot 9H_2O$, etc. which have a purity of not less than 98% by weight. When they are added in the form of powder, it is preferable that the average particle size is not more than 5μm and the BET specific surface area is 1-5 m²/g. On the other hand, when they are hydrolyzed and added after being converted to aqueous solutions of nitrates or alkoxide solutions, decomposed volatile components need be removed through calcination.

In the following, examples of the present invention will be explained more in detail. These examples are merely given as illustration of the invention, and should not be interpreted to limit the scope thereof.

Example 1

Samples were formulated according to the recipes shown in Table 1 using a silicon nitride raw material powder having a purity of about 96% by weight, average particle size of 0.7 μm, and BET specific surface area of 8.5 m²/g, sintering aids having purities of from 98 to 99% by weight and average particle size of 0.5-2 μm, and $Al_2O_3$. In each case the formulated material was milled using 7 mm outer diameter media, which had an iron core and a surface coated with a nylon resin to prevent admixing of impurities. Into 200 g of a milled raw material within a nylon resin vessel of an inner volume of 1.2 ℓ, 500 ml of acetone and 500 g of media were added and then the mixture was milled at 100 rpm for 300 hours by means of a rotary mill. After the resulting powder was dried, it was hydrostatically press molded under a pressure of 3 tons/cm² into a shape 60x60x6 mm. The resulting molding was sintered at 1,700°C for one hour under atmospheric pressure, thereby obtaining silicon nitride sintered bodies (Nos. 1 to 12) according to the present invention.

Samples, which compositions were outside the composition ranges of the present invention, were separately prepared under the same conditions, thereby obtaining comparative example sintered bodies (Nos. 13 to 17). Further, prior art samples (Nos. 18-20) were prepared. Comparison among these sintered bodies was performed by measurements with respect to bulk density, thermal conductivity, and strength.

The thermal conductivity was measured according to a laser flash method using a disc of 10 mm in diameter and 3 mm thick worked from a sintered body as a sample. As to the strength, four point bending strength was measured according to JIS R-1601 "Method of testing bending strength of fine ceramics". The bulk density, the thermal conductivity and the strength of the sintered bodies are shown in Table 1.

Table 1(a)

| | Sample No. | Formulation (wt%) | | | | | Bulk density (g/cm$^3$) | Thermal conductivity (cal/cm.sec.°C) W/mK | Strength at room temperature (MPa) |
|---|---|---|---|---|---|---|---|---|---|
| | | Si$_3$N$_4$ | calculated as Al$_2$O$_3$ | calculated as SrO | calculated as MgO | calculated as CeO$_2$ | | | |
| Present invention | 1 | 93.5 | 1.0 | 1.0 | 2.5 | 2.0 | 3.09 | 25 (0.06) | 617 |
| | 2 | 86 | 2.0 | 2.0 | 5.0 | 5.0 | 3.11 | 25 (0.06) | 676 |
| | 3 | 90.0 | 2.0 | 3.0 | 3.0 | 2.0 | 3.12 | 21 (0.05) | 612 |
| | 4 | 88 | 5.0 | 1.5 | 2.5 | 3.0 | 3.12 | 21 (0.05) | 653 |
| | 5 | 86.5 | 7.0 | 1.4 | 2.3 | 2.8 | 3.10 | 21 (0.05) | 622 |
| | 6 | 82.2 | 7.0 | 1.4 | 4.7 | 4.7 | 3.13 | 17 (0.04) | 631 |
| | 7 | 85.5 | 7.0 | 2.8 | 2.8 | 1.9 | 3.07 | 13 (0.03) | 604 |
| | 8 | 83.0 | 10.0 | 1.5 | 2.5 | 3.0 | 3.09 | 13 (0.03) | 615 |
| | 9 | 78.5 | 10.0 | 1.5 | 5.0 | 5.0 | 3.17 | 8 (0.02) | 594 |
| | 10 | 81.0 | 15.0 | 0.5 | 2.0 | 1.5 | 3.15 | 8 (0.02) | 584 |
| | 11 | 81.0 | 15.0 | 2.0 | 0.5 | 1.5 | 3.14 | 4 (0.01) | 567 |
| | 12 | 76.5 | 20.0 | 0.5 | 2.0 | 1.0 | 3.16 | 4 (0.01) | 554 |

Table 1(b)

| | Sample No. | Formulation (wt%) | | | | | Bulk density (g/cm$^3$) | Thermal conductivity (cal/cm.sec.°C) W/mK | Strength room temperat (MPa) |
|---|---|---|---|---|---|---|---|---|---|
| | | Si$_3$N$_4$ | calculated as Al2O3 | calculated as SrO | calculated as MgO | calculated as CeO2 | | | |
| Comparative example | 13 | 92.9 | 0.1 | 1.5 | 2.5 | 3.0 | 3.07 | 29 (0.07) | 669 |
| | 14 | 96 | 0.5 | 0.5 | 2.0 | 1.0 | 3.02 | 29 (0.07) | 609 |
| | 15 | 71.0 | 22.0 | 1.5 | 2.5 | 3.0 | 3.07 | 4 (0.01) | 490 |
| | 16 | 71.5 | 25.0 | 0.5 | 2.0 | 1.0 | 3.10 | 4 (0.01) | 431 |
| | 17 | 66.7 | 25.0 | 1.1 | 3.4 | 3.8 | 3.13 | 4 (0.01) | 315 |
| Prior art | 18 | 93.0 | — | 1.5 | 2.5 | 3.0 | 3.03 | 29 (0.07) | 691 |
| | 19 | 88.5 | — | 1.5 | 5.0 | 5.0 | 3.19 | 29 (0.07) | 632 |
| | 20 | 96.5 | — | 0.5 | 2.0 | 1.0 | 3.01 | 33 (0.08) | 612 |

As is obvious from the results of Table 1, a silicon nitride sintered body having a low thermal conductivity and a high strength can be obtained by the present invention.

Consequently, silicon nitride sintered bodies according to the present invention can be advantageously used, for instance, as engine parts required to have a heat insulating property. The invention therefore extends to such engine parts.

**Claims**

1. A silicon nitride sintered body which contains compounds of Mg, Sr and Ce in amounts respectively of from 0.5 to 5% by weight calculated as MgO, from 0.5 to 5% by weight calculated as SrO, and from 1 to 10% by weight calculated as CeO$_2$, the balance being silicon nitride, characterized in that a compound of Al is present in an amount of from 1 to 20% by weight calculated as Al$_2$O$_3$.

2. A silicon nitride sintered body according to claim 1 having a thermal conductivity of not more than 21 W · m$^{-1}$ . K$^{-1}$ (0.05 cal/cm·s·°C).

3. A method of manufacturing a silicon nitride sintered body, which comprises the steps of formulating and molding a raw material powder comprising compounds of Mg, Sr and Ce in amounts respectively of from 0.5 to 5% by weight calculated as MgO, from 0.5 to 5% by weight calculated as SrO, from 1 to 10% by weight calculated as $CeO_2$, the balance being silicon nitride raw material, and firing the resulting molding in a nitrogen atmosphere or an inert gas atmosphere, characterized in that the raw material powder contains a compound of Al in an amount of 1 to 20% by weight calculated as $Al_2O_3$.

4. A method according to claim 3 wherein the silicon nitride raw material contains not less than 30% by weight of α-phase.

5. A method according to claim 3 or claim 4 wherein the firing temperature is 1600 to 1900°C.

**Patentansprüche**

1. Gsinterter Siliciumnitridkörper, der Verbindungen von Mg, Sr und Ce jeweils in Mengen von 0,5 bis 5 Gew.-%, berechnet als MgO, von 0,5 bis 5 Gew.-%, berechnet als SrO, unf von 1 bis 10 Gew.-%, berechnet als $CeO_2$, und als Rest Silicumnitrid enthält, dadurch gekennzeichnet, daß eine Verbindung von Al in einer Menge von 1 bis 20 Gew.-%, berechnet als $Al_2O_3$, vorliegt.

2. Gesinterter Siliciumnitridkörper nach Anspruch 1, der eine Wärmeleitfähigkeit von nicht mehr als 21 $W \cdot m^{-1} \cdot k^{-1}$ (0.05 cal/cm·s·°C).

3. Verfahren zur Herstellung eines gesinterten Siliciumnitrid-Körpers, das die Stufen umfaßt: Formulieren und Formen eines Rohmaterial-Pulvers, das Verbindungen von Mg, Sr und Ce in den jeweiligen Mengen von 0,5 bis 5 Gew.-%, berechnet als MgO, von 0,5 bis 5 Gew.-%, berechnet als SrO, von 1 bis 10 Gew.-%, berechnet als $CeO_2$, und als Rest Siliciumnitrid-Rohmaterial enthält, und Brennen des resultierenden Formkörpers in einer Stickstoffatmosphäre oder in einer Inertgasatmosphäre, dadurch gekennzeichnet, daß das Rohmaterial-Pulver eine Verbindung von Al in einer Menge von 1 bis 20 Gew.-%, berechnet als $Al_2O_3$, enthält.

4. Verfahren nach Anspruch 3, worin das Siliciumnitrid-Rohmaterial nicht weniger als 30 Gew.-% α-Phase enthält.

5. Verfahren nach Anspruch 3 oder 4, worin die Brenntemperatur 1600 bis 1900°C beträgt.

**Revendications**

1. Corps fritté de nitrure de silicium qui contient des composés de Mg, Sr et Ce en des quantités respectivement de 0,5 à 5% en poids calculée comme étant MgO, de 0,5 à 5% en poids calculée comme étant SrO et de 1 à 10% en poids calculée comme étant $CeO_2$, le complément étant du nitrure de silicium, caractérisé en ce qu'un composé de Al est présent en une quantité de 1 à 20% en poids calculée comme étant $Al_2O_3$.

2. Corps fritté de nitrure de silicium selon la revendication 1 ayant une conductivité thermique non supérieure à 21 $W \cdot m^{-1} \cdot K^{-1}$ (0.05 cal/cm·s·°C).

3. Procédé de fabrication d'un corps fritté de nitrure de silicium qui comprend les étapes de formuler et mouler une poudre de matériau brut comprenant des composés de Mg, Sr et Ce en des quantités respectivement de 0,5 à 5% en poids calculée comme étant MgO, de 0,5 à 5% en poids calculée comme étant SrO, de 1 à 10% en poids calculée comme étant $CeO_2$, le complément étant un matériau brut de nitrure de silicium, et de chauffer l'article moulé résultant dans une atmosphère d'azote ou dans une atmosphère de gaz inerte, caractérisé en ce que la poudre de matériau brut contient un composé de Al en une quantité de 1 à 20% en poids calculée comme étant $Al_2O_3$.

4. Procédé selon la revendication 3, dans lequel le matériau brut de nitrure de silicium contient au moins 30% en poids de phase α.

5. Procédé selon la revendication 3 ou la revendication 4, dans lequel la température de chauffage est de 1600 à 1900°C.